# EUROPEAN PATENT APPLICATION

(11) **EP 4 579 569 A1**
(43) Date of publication of application: **02.07.2025**
(21) Application number: 24223534.9
(22) Date of filing: 27.12.2024
(51) Int. Cl.: G06Q 40/12

(54) **SYSTEM AND METHOD FOR PAYROLL RECONCILIATION AND PAYMENT**

(30) Priority: 29.12.2023 US 202363616207 P
(71) Applicant: Salus Finance LLC, Old Greenwich, CT 06870 (US)
(72) Inventor: Bull, Robert A., Old Greenwich, CT 06870 (US)
(74) Representative: Luppi Intellectual Property S.r.l.

(57) **Abstract**

A system for managing benefits payment having an input port receiving benefits plan information corresponding to benefits recipients, an identification of a benefits plan having a benefits plan cycle and a benefits plan cost, and receiving a payroll including, for each benefit recipient, at least one deduction slot indicating a deduction amount, a computer including a processor executing a cost calculation module determining an expected deduction amount for each benefit plan based on the benefits plan cycle and benefits plan cost, a mapping module mapping at least one deduction slot and at least a portion of the deduction amount to at least one benefits plan to determine an actual deduction amount per benefits plan, and a discrepancy module identifying discrepancies by comparing each actual deduction amount per benefits plan with the expected deduction amount for each benefits plan, and an output port sending the identified discrepancies to a user device.

## Description

### CROSS-REFERENCE TO RELATED APPLICATIONS

This application claims the benefit of U.S. Provisional Patent Application No. 63/616,207, filed December 29, 2023, the contents of which are incorporated by reference.

### TECHNICAL FIELD

The present disclosure is directed towards a system and method for payroll reconciliation and payment. Specifically, the disclosure relates to an automated system to manage benefits deductions on payroll and remit consolidated payments to benefits providers. The disclosure also relates to an automated system that inputs payroll information, benefits enrollment information and optionally provider invoices to reconcile this information and adjust any payroll deductions or payments to providers in response.

### BACKGROUND

Management payroll and benefits is a difficult and time-consuming task. On one level, there is a need to pay third-party insurance companies, brokers, carriers, administrators, or other benefit providers (collectively, "providers") for the benefits elected by those working for business, whether they are owners, employees, independent contractors, etc. (herein, "employees"). Currently, many companies paying providers upon receipt of an invoice without comparing the invoice to the deductions made in an employee's paycheck as part of payroll. This is because systems managing employee benefit enrollment and payroll are typically separate and unintegrated. This can cause cash flow issues for the company, especially small businesses, when there are significant discrepancies between benefit enrollment and payroll deductions, such as when employees are terminated or joined the company in the middle of a benefits cycle. Accordingly, there exists a need for a system that allows for the payment of benefit premiums based on amounts deducted in payroll instead of the invoice received from the provider.

There also existed me to reconcile the amounts deducted on payroll with employee benefit enrollment. For example, payroll and the deductions made for benefits must be adjusted as employees or independent contractors enter or leave a company or change the benefits which they receive. In addition, payroll and deductions must be adjusted when third-party insurance companies, brokers, carriers, administrators, or others change their pricing. Currently, someone in human resources or the finance department of a company must check each adjustment, whether made by someone within the company or by a third-party provider. This becomes an error-prone task in which deductions must be valued and checked at both the employee and business levels. As a result, a company may not withhold enough money from an employee resulting in the company fronting funds to pay a benefits provider when their bill comes due. Alternatively, an employee may have too many deductions withdrawn from their paycheck where they have money withheld this pre-tax or post-tax inaccurately. Still, in some cases this may be an intentional design of the system. For example, in the case of seasonal businesses such as schools and teachers, employees may receive paychecks only part of the year, but receive year-round benefits that are typically paid by the company on a monthly billing cycle.

Accordingly, there exists an in the art for system which automates payment based on employee deductions and simplifies payroll reconciliation.

Other features and aspects of the present teachings will become apparent from the following detailed description, taken in conjunction with the accompanying drawings, which illustrate by way of example the features in accordance with embodiments of the present teachings. The summary is not intended to limit the scope of the present teachings.

### SUMMARY

The needs set forth herein as well as further and other needs and advantages are addressed by the present embodiments, which illustrate solutions and advantages described below.

Is an object of the present disclosure to remedy the above drawbacks in the shortcomings associated with historical practices and methods of administering benefits and reconciling deductions and payments therefore.

It is an object of the present disclosure to provide a system and method for generating carrier bills and paying providers based on payroll deductions.

It is an object of the present disclosure to provide a system and method for generating carrier bill and paying providers after reconciling payroll deductions with benefits enrollment and adjusting payroll deductions based thereon.

In one aspect, a system for managing benefits payments is disclosed having an input port receiving benefits plan information corresponding to benefits recipients, including an identification of at least one benefits plan having a benefits plan cycle and a benefits plan cost. The input port receives a payroll including, for each benefit recipient, at least one deduction slot indicating a deduction amount. A computer includes for executing a cost calculation module, a mapping module, and a reconciliation module. The cost calculation module determines an expected deduction amount for each benefit plan based on the benefits plan cycle and benefits plan cost. The mapping module maps at least one deduction slot and at least a portion of the deduction amount to at least one benefits plan to determine an actual deduction amount per benefits plan. The discrepancy module identifies discrepancies by comparing each actual deduction amount per benefits plan with the expected deduction amount for each benefits plan. The output port sends the identified discrepancies to a user device.

In another aspect, a consolidated bill generation module is executed by said processor, said consolidated bill generation module grouping benefits plans into carrier groups based on benefits plan information and merging a carrier bill based at least the actual deduction amount, benefits plan cost, and the benefits plan cycle. An output port sends the carrier bill to a user device.

In another aspect, a payment processing module executes on the processor that communicates with an external banking system for payment of the carrier bill.

In another aspect, the input port receives a carrier invoice having a carrier invoice benefits plan cost. The discrepancy module identifies additional discrepancies by comparing the carrier invoice benefits plan cost to the discrepancies identified by comparing each actual deduction amount per benefits plan with the expected deduction amount for each benefits plan.

In another aspect, a reconciliation module is configured to identify and present options to cure the discrepancies and said reconciliation module merging said discrepancies and options into a report for display on a user device.

In another aspect, the options include correcting an enrollment of the benefit recipient if the benefit recipient is identified on only one of the benefit benefits plan information and payroll.

In another aspect, the reconciliation module receives user input in response to the presented options to cure discrepancies and determines a new actual deduction amount for at least one payroll.

In another aspect, the new actual deduction amount is determined by either curing the discrepancy in the next payroll, spreading the cure across remaining payrolls in the benefits cycle, or deducting fixed or percentage amount that total to the discrepancy amount until cured.

In another aspect, a consolidated bill generation module is executed by said processor, said consolidated bill generation module grouping benefits plans into carrier groups based on benefits plan information and merging a carrier bill based at least on the new actual deduction amount, the benefits plan cost, and the benefits plan cycle. An output port sends the carrier bill to a third-party device.

In another aspect, a payment processing module executes on the processor that communicates with an external banking system for payment of the carrier bill.

In another aspect, a consolidated bill generation module executed by said processor groups benefits plans into carrier groups based on benefits plan information and merges a carrier bill based at least the actual deduction amount, benefits plan cost, and the benefits plan cycle. An output port sends the carrier bill to a third-party device. A payment processing module executes on the processor that communicates with an external banking system for payment of the carrier bill.

In another aspect, the input port receives a carrier invoice having a carrier invoice benefits plan cost and the discrepancy module identifies additional discrepancies by comparing the carrier invoice benefits plan cost to the discrepancies identified by comparing each actual deduction amount per benefits plan with the expected deduction amount for each benefits plan.

In another aspect, the benefits plan information 21 includes a benefits type and the at least one deduction slot includes a deduction type, said mapping module using the benefits type and the deduction type to match the deduction slot to a benefits plan.

In another aspect, a consolidated bill generation module is executed by said processor, said consolidated bill generation module grouping benefits plans into carrier groups based on benefits plan information and merging a carrier bill based at least on the benefits plan cost, and the benefits plan cycle. An output port sends the carrier bill to a third-party device. A payment processing module executes on the processor that communicates with an external banking system for payment of the carrier bill, wherein the payment is taken from at least from funds associated with the actual deduction amounts.

In another aspect, an employee deduction reserve module tracks discrepancies across all benefit recipients and updates an employee deduction reserve fund and wherein the payment may also be taken from funds associated with the employee deduction reserve fund.

In another aspect, a verification module receives a user input corresponding to at least one benefit plan recipient and compares the user input with said benefits plan information, benefits plan, benefits plan cycle, and/or benefits plan cost to update said benefits plan information benefits plan information, benefits plan, benefits plan cycle, and/or benefits plan cost based at least in part on the user input.

In another aspect, a system for managing benefits payments is provided having an input port receiving benefits plan information corresponding to benefits recipients, including an identification of at least one benefits plan having a benefits plan cycle and a benefits plan cost. The input port receives a payroll including, for each benefit recipient, at least one deduction slot indicating a deduction amount. A computer includes a processor for executing a cost calculation module, a mapping module, and a reconciliation module. The cost calculation module determines an expected deduction amount for each benefit plan based on the benefits plan cycle and benefits plan cost. The mapping module maps at least one deduction slot and at least a portion of the deduction amount to at least one benefits plan to determine an actual deduction amount per benefits plan. The discrepancy module identifies discrepancies by comparing each actual deduction amount per benefits plan with the expected deduction amount for each benefits plan. An output port sends the identified discrepancies to a user device. A consolidated bill generation module executed by said processor groups benefits plans into carrier groups based on benefits plan information and merging a carrier bill based at least the actual deduction amount, benefits plan cost, and the benefits plan cycle. The output port sends the carrier bill to a user device. A payment processing module executing on the processor that communicates with an external banking system for payment of the carrier bill.

In another aspect, a system for managing benefits payments is provided having an input port receiving benefits plan information corresponding to benefits recipients, including an identification of at least one benefits plan having a benefits plan cycle and a benefits plan cost. The input port receives a payroll including, for each benefit recipient, at least one deduction slot indicating a deduction amount. A computer includes a processor for executing a verification cost calculation module, a mapping module, and a reconciliation module. The verification module receives a user input corresponding to at least one benefit plan recipient and compares the user input with said benefits plan information, benefits plan, benefits plan cycle, and/or benefits plan cost to update said benefits plan information benefits plan information, benefits plan, benefits plan cycle, and/or benefits plan cost based at least in part on the user input. The cost calculation module determines an expected deduction amount for each benefit plan based on the benefits plan cycle and benefits plan cost. The mapping module maps at least one deduction slot and at least a portion of the deduction amount to at least one benefits plan to determine an actual deduction amount per benefits plan. The discrepancy module identifies discrepancies by comparing each actual deduction amount per benefits plan with the expected deduction amount for each benefits plan. An output port sends the identified discrepancies to a user device. A consolidated bill generation module executed by said processor groups benefits plans into carrier groups based on benefits plan information and merging a carrier bill based at least the actual deduction amount, benefits plan cost, and the benefits plan cycle. The output port sends the carrier bill to a user device. A payment processing module executing on the processor that communicates with an external banking system for payment of the carrier bill.

In another aspect, the input port receives a carrier invoice halves a carrier invoice benefits plan cost. The discrepancy module further identifies additional discrepancies by compares the carrier invoice benefits plan cost to the discrepancies identified by compares each actual deduction amount per benefits plan with the expected deduction amount for each benefits plan.

In another aspect, a system for manages benefits payments is disclosed having an input port receives benefits plan information corresponds to benefits recipients, includes an identification of at least one benefits plan haves a benefits plan cycle and a benefits plan cost. The input port receives a payroll includes, for each benefit recipient, at least one deduction slot indicates a deduction amount. A computer includes a processor for executing a cost calculation module, a mapping module, and a reconciliation module. The cost calculation module determines an expected deduction amount for each benefit plan based on the benefits plan cycle and benefits plan cost. The mapping module maps at least one deduction slot and at least a portion of the deduction amount to at least one benefits plan to determine an actual deduction amount per benefits plan. The discrepancy module identifies discrepancies by comparing each actual deduction amount per benefits plan with the expected deduction amount for each benefits plan. A reconciliation module is configured to identify and present options to cure the discrepancies and said reconciliation module merges said discrepancies and options into a report for display on a user device. The reconciliation module receives user input in response to the presented options to cure discrepancies and determines a new actual deduction amount for at least one payroll. A consolidated bill generation module executed by said processor, said consolidated bill generation module groups benefits plans into carrier groups based on benefits plan information and merges a carrier bill based at least on the new actual deduction amount, the benefits plan cost, and the benefits plan cycle. An output port sends the carrier bill to a third-party device.

In other aspect, a payment processes module executes on the processor that communicates with an external banking system for payment of the carrier bill.

In another aspect, the input port receives a carrier invoice haves a carrier invoice benefits plan cost. The discrepancy module identifies additional discrepancies by comparing the carrier invoice benefits plan cost to the discrepancies identified by compares each actual deduction amount per benefits plan with the expected deduction amount for each benefits plan.

### BRIEF DESCRIPTION OF THE DRAWINGS

FIG. 1 shows a schematic view of a system and method for automating payroll reconciliation and payment for benefits information according to the present disclosure.
FIG. 2 shows a process flow diagram for generating a carrier bill and paying providers based on payroll deductions.
FIG. 3 shows a process flow diagram for payroll reconciliation with benefits enrollment and generating a carrier bill and paying providers based on the reconciliation.

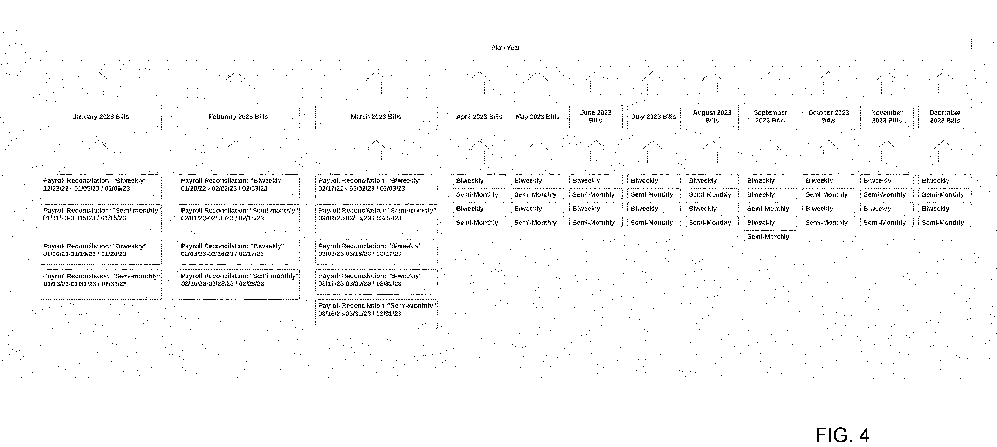

FIG. 4 shows a calendar for payroll reconciliation for a benefits plan beginning in January 2023 and ending in December 2023 for both bi-weekly and semi-monthly payroll periods.
FIG. 5 shows a schematic view of a system and method for automating payroll reconciliation and payment for benefits information according to the present disclosure.

### DETAILED DESCRIPTION

The present teachings are described more fully hereinafter with reference to the accompanying drawings, in which the present embodiments are shown. The following description is presented for illustrative purposes only and the present teachings should not be limited to these embodiments.

In the following description, various aspects of the present disclosure are described. For purposes of explanation, specific configurations and details are set forth in order to provide a thorough understanding of the present disclosure. However, it will be apparent to one skilled in the art that the present disclosure may be practiced without the specific details presented herein. Furthermore, well known features may have been omitted or simplified in order not to obscure the present disclosure. With specific reference to the drawings, it is stressed that the particulars shown are by way of example for purposes of illustrative discussion of the present disclosure only and are presented in the cause of providing what is believed to be most useful and readily understood description of the principles and conceptual aspects of the disclosure. In this regard, no attempt is made to show structural details of the disclosure in more detail than is necessary for a fundamental understanding of the disclosure, the description taken with the drawings making apparent to those skilled in the art how the several forms of the disclosure may be embodied in practice.

The disclosure is not limited in its application to the details of construction and the arrangement of the components set forth in the following description or illustrated in the drawings. The disclosure is applicable to other disclosures that may be practiced or carried out in various ways as well as to combinations of the disclosure. The phraseology and terminology employed herein are for the purpose of description and should not be regarded as limiting.

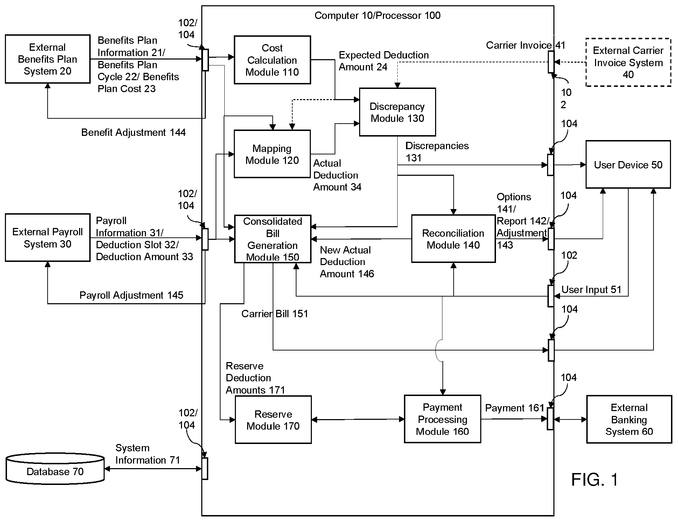

FIG. 1 shows systems for paying benefit providers and reconciling payroll with benefits enrollment and optionally provider bills.

The system 1 includes a computer 10, an external benefits plan system 20, external payroll system 30, external carrier invoice system 40, user device 50, external banking system 60 and database 70.

The computer 10 may be or include any processor, remote computer, computer server, desktop computer, laptop, smartphone, tablet, network, or any other computing resource. While one computer is described, a person of ordinary skill in the art would understand that multiple computers may be used in the context of this disclosure. The computer may include one or more processors 100, which may be configured to run software. If multiple processors 100 are used, the multiple processors 100 may be or include a distributed computing network.

The computer 10 has one or more input ports 102 for receiving information and data from one or more external sources, such as a user, client, or provider, via any suitable mechanism. In some cases, the input ports 102 may receive information via computer network such as the Internet, such as via HTTPS, FTP, APIs, database calls, or other known methods. In other cases, the input port 102 may be configured such that a user provides information to the system 10 via a form or a file. Information provided to the computer 10 may be done so on a periodic basis, on a one-time basis, or on demand.

The computer 10 has one or more output ports 104 for sending information and data to one or more external sources, such as a user, client, or provider via any suitable mechanism. The computer 10 may send data feeds to recipients external to the computer 10 in any suitable format, either via computer network such as the Internet, such as via HTTPS, FTP, APIs, database calls, or other known methods. In some cases, the output port 104 may be configured to provide a file or email. Information provided by the computer 10 may be done so on a periodic basis, on a one-time basis, or on demand.

The computer 10 may be in communication with third-party platforms, including third-party platforms for services such as accounting, payroll, human resources, payment processing, benefits provision, and financial services. Such third-party platforms may send feeds of data to the computer 10 that are received by the computer 10 and that may be consolidated and reconciled in the computer 10. Such third-party platforms may include external benefits plan system 20, external payroll system 30, external carrier invoice system 40, user device 50, external banking system 60, and database 70. It is understood that any of these third-party platforms may also be integrated into the system 1 and provide the same data feed to the computer 10.

The computer 10 may be in data communication with an external benefits plan system 20. The external benefits plan system 20 may provide one or more feeds of data to the computer 10 via input port 102. Alternatively, or additionally, the external benefits plan system 20 may be embodied by a user (including someone at the company or provider) that uploads or otherwise provides data to the computer 10. The external benefits plan system 20 may provide information to the computer 10 such as benefits plan information 21, benefits plan cycle 22, and benefits plan cost 23. Benefits plan information 21 may include information such as employee names, elected benefit plans, the type of elected benefit plans (e.g., medical, dental, life insurance, etc.), benefits plan cycle 22, and benefits plan cost 23, and any other data necessary for the system 1 to function. Benefits plan cycle 22 may include information relating to the benefits plan time cycle (e.g., yearly) and information corresponding to a benefits plan billing cycle (e.g., monthly) and the charges associated therewith. Benefits plan cost 23 may include information relating to the costs for each benefits plan on a per-plan, per-employee and company basis. For example, benefits plan information 21 may identify a medical plan with Provider A associated with Employee B, benefits plan cycle 22 may identify that the medical plan is a yearly plan with a monthly billing cycle, and benefits plan cost 23 may identify that Employee B pays $10,000 a year for coverage, or about $833.33 a billing cycle.

The computer 10 may be in data communication with an external payroll system 30. The external payroll system 30 may provide one or more feeds of data to the computer 10 via input port 102. Alternatively, or additionally, the external payroll system 30 may be embodied by a user (including someone at the company or provider) that uploads or otherwise provides data to the computer 10. The external payroll system 30 may provide information to the computer 10 such as payroll information 31, including deduction slot 32, and deduction amount 33. Payroll information 31 may include information such as employee names, payroll amounts (e.g., on a total or per-employee basis), payroll frequency (bi-weekly, semi-monthly, etc.), and any other data necessary for the system 1 to function. Deduction slot 32 may include information relating to deductions made on a per-employee basis. Since traditional systems included only one deduction slot 32, the information provided as part of deduction slot 32 may be an aggregate of various benefit plans. Alternatively, multiple deduction slots 32 may be provided on a per-employee basis, and may correspond one-to-one with benefits plans (i.e., one slot for medical corresponding to a medical insurance plan). Each deduction slot 32 corresponds to a deduction amount 33, which includes the total deduction for the pay period and optionally information as to whether that money was deducted pre-tax or post-tax. For example, Employee B may be identified in payroll information 31, which indicates that it is a semi-monthly payroll, and have three deduction slots 32, one for medical, one for dental, and one for life insurance. The deduction amount 33 for Employee B's medical benefit may be about $416.67 a pay period. The payroll information 31 may also include information about the total deductions made for an employee over a given time period, such as the benefits plan cycle 22 or the current year.

The computer 10 may be in data communication with an external carrier invoice system 40. The external carrier invoice system 40 may provide one or more feeds of data to the computer 10 via input port 102. Alternatively, or additionally, the external carrier invoice system 40 may be embodied by a user (including someone at the company or provider) that uploads or otherwise provides data to the computer 10. The external carrier invoice system 40 may provide information to the computer 10 such as a carrier invoice 41. Carrier invoice 41 may correspond to an invoice from a provider regarding charges accrued for a benefits plan in a plan billing cycle.

The computer 10 may be in data communication with a user device 50. The user device 50 may be associated with a user of the system 1 and may provide information to the computer 10 when the system is configured not to use one of the external systems, such as external benefits plan system 20, external payroll system 30, external carrier invoice system 40, external banking system 60, or database 70. In these cases, the user device 50 may provide information such as benefits plan information 21, benefits plan cycle 22, benefits plan cost 23, payroll information 31, deduction slot 32, deduction amount 33, carrier invoice 41, information associated with payment 161, or system information 71. The user device 50 may provide one or more feeds of data to the computer 10 via input port 102. Alternatively, or additionally, the user device 50 may be embodied by a user (including someone at the company or provider) that uploads or otherwise provides data to the computer 10.

The user device 50 may receive information from the computer 10 via an output port 104. The user device may receive discrepancies 131, options 141 or report 142 from the computer 10, which are discussed in more detail below. The user device 50 may provide information via input port 102 to the computer 10 such as a user input 51, which may be in response to a prompt or notification from the computer 10.

The computer 10 may be in data communication with one or more external banking systems 50 via input port 102 and/or output port 104. The computer 10 may communicate with the external banking systems to effectuate a payment using known methods. The computer 10 may receive information regarding the payment from the external banking system 50, such as a payment confirmation.

The computer 10 may be in data communication with one or more databases 70. The database 70 may be storage local to the computer 10, networked storage, cloud storage, or any other known storage method. The database 70 stores system information 71 received from the computer 10 via output port 104 and provides requested system information 71 to the computer 10 via input port 102. System information 71 can be any information relating to the system 1. For example, computer 10 may store any information it receives via an input port 102 on the database 70 as system information 71. This allows the computer to recall that system information 71 at a later time to improve system performance and reduce external data requests. System information 71 may also include the results of processing of the information received via input port 102 to prevent reprocessing data.

The computer 10 may have modules dedicated to performing certain tasks as part of the system 1. The modules may be embodied in software and/or hardware. While modules are categorized and grouped herein according to specific components, a person having ordinary skill would understand that other configurations are possible and potentially beneficial.

The computer 10 may have a cost calculation module 110. The cost calculation module 110 determines an expected deduction amount 24 for each identified benefits plan based on the received benefits plan information 21. The cost calculation module will take the benefits plan cost 23 and divide it by pre-set payroll cycles (e.g., bi-weekly, bi-monthly, etc.) or use payroll information 31 to use the actual payroll cycle for the company to determine an expected deduction amount 24. Alternatively, the benefits plan information 21 may include an expected deduction amount 24 for each employee. Expected deduction amounts 24 may be calculated not just for the current payroll, but for the rest of the benefit plan cycle 22.

The computer 10 may have a mapping module 120 that determines an actual deduction amount 34 for each benefits plan associated with employees for a payroll cycle. The mapping module 120 may take benefits plan information 21, payroll information 31, and/or expected deduction amount 24 as inputs. The mapping module 120 identifies which benefits plans are associated with each deduction slot 32 and deduction amount 33 for each employee. In some cases, this can be done by matching a benefit slot description with information in the benefits plan information 21, e.g., a description of "medical" may map to a medical insurance plan. In cases where there are fewer deduction slots 32 than benefits plans identified in the benefits information 21, a deduction slot 32 may be mapped to multiple benefits plans, with the deduction amount 33 being split amount the multiple benefits plans. The mapping module 120 may use the benefits plan cost 23 (especially if a per-paycheck cost is provided) or the expected deduction amount 24 to determine an appropriate method for splitting the deduction amount 33. For example, if the sum of multiple benefits plan costs 23 equals the deduction amount 33 for a deduction slot, the actual deduction amounts will be known.

The computer 10 may have a discrepancy module 130 to determine if there are any discrepancies between the expected deduction amount 24 and the actual deduction amount 34 for each benefit plan associated with each employee. Any discrepancies 131 identified may be output to or displayed on user device 50 via output port 104. The discrepancies 131 may show the dollar or percentage difference between the expected deduction amount 24 and the actual deduction amount 34. The discrepancies 131 may also show that an employee is enrolled in a benefit, but associated money is not being deducted on payroll, or that the employee is on payroll and has deductions for a benefit, but not enrolled in that benefit.

Upon receiving the discrepancies 131, the company may make any necessary changes through their pre-existing systems, or through the system 1, as discussed below.

The discrepancy module 130 may also take a carrier invoice 41 as an input. In these cases, the total amount on the carrier invoice 41 may be split between employees (if not already split) and compared to the expected deducted amount 24 and actual deduction amount 34 for each employee to determine additional discrepancies 131. These additional discrepancies 131 may also be output to or displayed on user device 50 via output port 104.

The user device 50 may provide a user input 51 to the computer 10. The user input 51 may provide a request for a carrier bill 151 to pay the providers.

The consolidated bill generation module 150 may receive benefit plan information 21 and payroll information 31 may also be input. The consolidated bill generation module 150 may generate a carrier bill 151 for each benefits provider based on the benefits plan information 21, and payroll information 31, including the benefits plan cycle 22, benefits plan cost 23, deduction slot 32, and deduction amount 33. The carrier bill 151 may be output to the user device 50 for review. If payroll information 31 or benefits information 21 are unavailable such that discrepancies 131 cannot be determine, the system may use only the information available, such as the actual deduction amount 34 or the expected deduction amount 24 to generate a carrier bill 151.

The user input 51 may provide an instruction to pay a provider response to the carrier bill 151. The request to pay a provider in the user input 51 may be input to a payment processing module 160 configured to submit a payment 161 to an external banking system 60 via output port 104 to effectuate the payment.

The discrepancies 131 may also be provided to a reconciliation module 140 before carrier bill 151 is generated. In this case, reconciliation module 140 may determine options 141 that would cure the discrepancies 131. The options 141 may be output to the user device 50 via output port 104. The reconciliation module may also determine how much is remaining to be deducted for an employee for the rest of the benefits plan cycle 22 or the calendar year. The reconciliation module 140 may also take payroll information 31 from multiple payroll cycles, or be run in sequence throughout the year, to have more accurate and up-to-date information. If multiple payroll cycle's payroll information 31 is not available, the reconciliation module 140 may extrapolate from the payroll information 31 that is provided, assuming that deductions have remained constant for each employee throughout the year, or since a defined plan start date.

Options 141 may include allowing the employee to "catch up" in the next payroll, i.e., the next time payroll is run, the employee's deduction would include an additional dollar amount equaling the discrepancy, assuming the discrepancy is that the employee owes additional money for the benefit. If the discrepancy is in favor of the employee, the deduction on the next payroll could be less. If the catch-up option is selected, the employee's deduction in future payrolls would revert.

Options 141 may also include respreading the discrepancy amount across the remaining payrolls in the benefit cycle. For example, if the employee was $10 short with four remaining payrolls, the employee deduction amount would be adjusted by $2.50 per payroll.

Options 141 may also include adjusting the deducted amount by a fixed or percentage amounts of the discrepancy until the discrepancy is cured. This option 141 would require specification of the fixed or percentage amount of the discrepancy and/or the number of payrolls over which to cure the cure the discrepancy.

Option 141 may also include a request to rectify a discrepancy between an employee's payroll deductions and benefit enrollment status (i.e., the employee is enrolled in a benefit, but associated money is not being deducted on payroll, or that the employee is on payroll and has deductions for a benefit, but not enrolled in that benefit).

The option 141 may also output other information regarding the deductions, such as how much is remaining to be deducted for an employee for the rest of the benefits plan cycle 22 or the calendar year. The option 141 may also show the company how much money will be paid by the company in each payroll cycle, billing cycle for each benefit, and how much is owed for the remainder of the benefit plan cycle 22, calendar year, or any other time period. The option 141 may also show how much money is being deducted for each plan for each employee on a pre-tax, post-tax, or other basis and may alert the user if the money is categorized improperly or if the categorization of the tax basis is unknown.

When the option 141 is presented to the user device 50, the user may elect to make any necessary changes themselves. Alternatively, the user input 51 may specify which a selected option 141 and any parameters associated with that selection (e.g., the fixed amount).

All or a subset of the options 141 may be sent to the user device 50 via output port 104. In some cases, a report 142 may be generated that includes at least some of the options 141. The report 142 may be output to the user device 50 via output port 104.

In response to the options 141 or report 142, the user device 50 may send a user input 51 to the computer 10 via input port 102 that includes an adjustment 143. The adjustment 143 may be processed by the reconciliation module and output to the external benefits plan system 20 as a benefit adjustment 144 or to the external payroll system 30 as a payroll adjustment 145. The benefit adjustment 144 may change the status of an employee's benefits enrollment. The payroll adjustment 145 may change the amount deducted for benefits associated with an employee, e.g., the next time payroll is run.

If there are any payroll adjustments 145, a new actual deduction amount 146 may be sent to the consolidated bill generation module 150 and used to generate the carrier bill 151.

If discrepancies 131 are to be maintained or set to be cured over time, the consolidated bill generation module 150 may provide reserve deduction amounts 171 to a reserve module 170, which can be used to track any oversized deductions relative to amounts owed. This is particularly useful in cases where payment for year-round benefits are deducted from paychecks only in certain months, like in the case of schools and teachers. The reserve module 170 may be in communication with payment processing module 160, which communication can allow the payment processing module 160 to select accounts from which a payment 161 is to be taken, such as a reserve deduction account.

They system 1 may be run for a single payroll cycle or be used on all or a subset of all payrolls cycles in a benefits plan cycle to ensure deductions are being reconciled and that payment is being made.

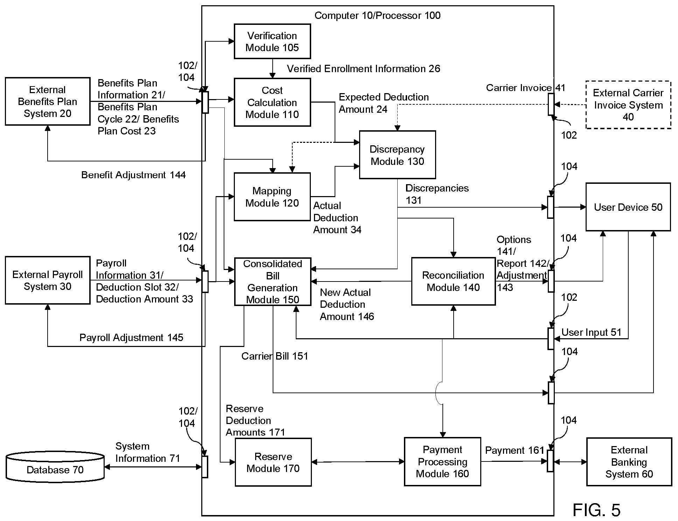

As described in FIG. 5, the computer 10 may have a verification module 105 for verifying enrollment changes and updating change dates before they impact the billing process. The verification module 105 may receive a user input 51 indicative of a change to benefits plan information 21. For example, the user input 51 may indicate that an employee gave notice of a new July birth in September. The verification module 105 may compare this information with benefits plan information 21 to generate verified enrollment information 26 that takes the new developments into account. Other information, such as benefits plan cycle 22, benefits plan cost 23, payroll information 31, deduction slot 32 and/or deduction amount 33, system information 71, or any other information may be used in this comparison. Verified enrollment information 26 is then used by the computer 10 in lieu of the outdated benefits plan information 21 (and any other now-outdated information). In this way, the system recognizes the retroactive change and generates any adjustments at the current billing cycle to account for the previous billing periods. In other words, the billing reflects the correct coverage and costs without requiring manual updates or the need to resolve discrepancies 131. Verification module 105 may also generate benefits adjustments 144 or payroll adjustments 145 to update the external benefits plan system 20 or the external payroll system 30. In some embodiments, benefits adjustments 144 and/or payroll adjustments 145 may be generated in a similar manner to that done by reconciliation module 140, such as by providing options 141 to the user device 50 and receiving user input 51, including to "catch-up" or "respread" new employee deductions associated with the verified enrollment information 26.

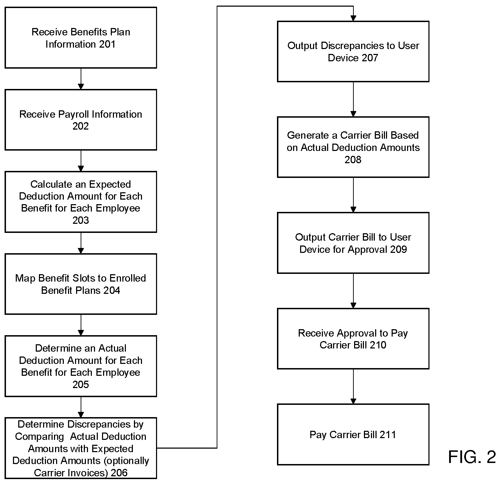

FIG. 2 shows a process flow for the system 1 where a carrier bill is paid based on the deductions made in a payroll. At step 201, the system receives benefits plan information. Optionally at this step, benefits plan information may be updated to reflect any recent changes to obviate the need for discrepancies at step 207. At step 202, the system receives payroll information. At step 203, the system calculates an expected deduction amount for each benefit for each employee. At step 204, benefit slots in the payroll are mapped to enrolled benefit plans for each employee. At step 205, an actual deduction amount for each benefit for each employee is determined. At step 206, discrepancies are determined by comparing actual deduction amounts with expected deduction amounts. Optionally, at least one carrier invoice may be input and compared to the discrepancies, actual deduction amounts and/or expected deduction amounts to determine additional discrepancies. At step 207, the discrepancies are output to a user device. At step 208, a carrier bill is generated based on actual deduction amounts. At step 209, the carrier bill is output to the user device. At step 210, the user approves the carrier bill. At step 211, the system pays the carrier bill.

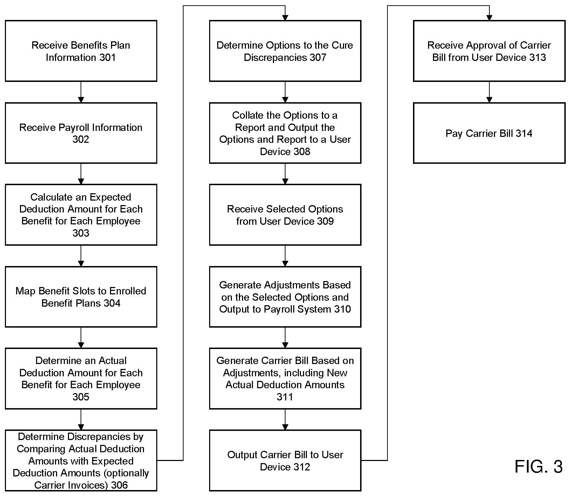

FIG. 3 shows a process flow for the system 1 where payroll reconciliation is run and a bill is paid based on an adjustment. At step 301, the system receives benefits plan information. At step 302, the system receives payroll information. At step 303, the system calculates an expected deduction amount for each benefit for each employee. At step 304, benefit slots in the payroll are mapped to enrolled benefit plans for each employee. At step 305, an actual deduction amount for each benefit for each employee is determined. At step 306, discrepancies are determined by comparing actual deduction amounts with expected deduction amounts. Optionally, at least one carrier invoice may be input and compared to the discrepancies, actual deduction amounts and/or expected deduction amounts to determine additional discrepancies. At step 307, options are determined to cure the discrepancies. At step 308, a report is generated based on the options and the report and options are output to a user device. At step 309, a user input is received with selections regarding one or more of the options. At step 310, the system generates adjustments based on the selected options and any input parameters and outputs them to the external payroll system for implementation. At step 311, a carrier bill is generated based on the adjustments, including any new actual deduction amounts for any employees. At step 312, the carrier bill is output to the user device. At step 313, the system receives an approval of the carrier bill from the user device. At step 314, the system pays the carrier bill.

The foregoing description is a specific embodiment of the present disclosure. It should be appreciated that this embodiment is described for purposes of illustration only, and that numerous alterations and modifications may be practiced by those skilled in the art without departing from the spirit and scope of the disclosure. It is intended that all such modifications and alterations be included insofar as they come within the scope of the invention as claimed or the equivalent thereof.

## Claims

1. A system for managing benefits payments, comprising:
an input port receiving benefits plan information corresponding to benefits recipients, including an identification of at least one benefits plan having a benefits plan cycle and a benefits plan cost;
said input port receiving a payroll including, for each benefit recipient, at least one deduction slot indicating a deduction amount;
a computer including a processor for executing a cost calculation module, a mapping module, and a reconciliation module;
said cost calculation module determining an expected deduction amount for each benefit plan based on the benefits plan cycle and benefits plan cost;
said mapping module mapping at least one deduction slot and at least a portion of the deduction amount to at least one benefits plan to determine an actual deduction amount per benefits plan;
said discrepancy module identifying discrepancies by comparing each actual deduction amount per benefits plan with the expected deduction amount for each benefits plan; and
an output port for sending the identified discrepancies to a user device.

2. The system of claim 1, further comprising:
a consolidated bill generation module executed by said processor, said consolidated bill generation module grouping benefits plans into carrier groups based on benefits plan information and merging a carrier bill based at least the actual deduction amount, benefits plan cost, and the benefits plan cycle; and
said output port sending the carrier bill to a user device.

3. The system of claim 2, further comprising a payment processing module executing on the processor that communicates with an external banking system for payment of the carrier bill.

4. The system of claim 2, further comprising:
the input port receiving a carrier invoice having a carrier invoice benefits plan cost;
the discrepancy module identifying additional discrepancies by comparing the carrier invoice benefits plan cost to the discrepancies identified by comparing each actual deduction amount per benefits plan with the expected deduction amount for each benefits plan.

5. The system of claim 1, further comprising a reconciliation module configured to identify and present options to cure the discrepancies and said reconciliation module merging said discrepancies and options into a report for display on a user device.

6. The system of claim 5, wherein the options include correcting an enrollment of the benefit recipient if the benefit recipient is identified on only one of the benefit benefits plan information and payroll.

7. The system of claim 5, said reconciliation module receiving user input in response to the presented options to cure discrepancies and determining a new actual deduction amount for at least one payroll.

8. The system of claim 7, wherein the new actual deduction amount is determined by either curing the discrepancy in the next payroll, spreading the cure across remaining payrolls in the benefits cycle, or deducting fixed or percentage amount that total to the discrepancy amount until cured.

9. The system of claim 7, further comprising:
a consolidated bill generation module executed by said processor, said consolidated bill generation module grouping benefits plans into carrier groups based on benefits plan information and merging a carrier bill based at least on the new actual deduction amount, the benefits plan cost, and the benefits plan cycle; and
an output port for sending the carrier bill to a third-party device.

10. The system of claim 6, further comprising a payment processing module executing on the processor that communicates with an external banking system for payment of the carrier bill.

11. The system of claim 7, further comprising a consolidated bill generation module executed by said processor, said consolidated bill generation module grouping benefits plans into carrier groups based on benefits plan information and merging a carrier bill based at least the actual deduction amount, benefits plan cost, and the benefits plan cycle;
an output port for sending the carrier bill to a third-party device; and
a payment processing module executing on the processor that communicates with an external banking system for payment of the carrier bill.

12. The system of claim 5, further comprising:
the input port receiving a carrier invoice having a carrier invoice benefits plan cost; and
the discrepancy module identifying additional discrepancies by comparing the carrier invoice benefits plan cost to the discrepancies identified by comparing each actual deduction amount per benefits plan with the expected deduction amount for each benefits plan.

13. The system of claim 1, wherein the benefits plan information includes a benefits type and the at least one deduction slot includes a deduction type, said mapping module using the benefits type and the deduction type to match the deduction slot to a benefits plan.

14. The system of claim 1, further comprising a consolidated bill generation module executed by said processor, said consolidated bill generation module grouping benefits plans into carrier groups based on benefits plan information and merging a carrier bill based at least on the benefits plan cost, and the benefits plan cycle;
an output port for sending the carrier bill to a third-party device;
a payment processing module executing on the processor that communicates with an external banking system for payment of the carrier bill, wherein the payment is taken from at least from funds associated with the actual deduction amounts.

15. The system of claim 14, further comprising an employee deduction reserve module tracking discrepancies across all benefit recipients and updates an employee deduction reserve fund; wherein the payment may also be taken from funds associated with the employee deduction reserve fund.

16. A system for managing benefits payments, comprising:
an input port receiving benefits plan information corresponding to benefits recipients, including an identification of at least one benefits plan having a benefits plan cycle and a benefits plan cost;
said input port receiving a payroll including, for each benefit recipient, at least one deduction slot indicating a deduction amount;
a computer including a processor for executing a verification module, a cost calculation module, a mapping module, and a reconciliation module;
said verification module receiving a user input corresponding to at least one benefit plan recipient and comparing the user input with said benefits plan information, benefits plan, benefits plan cycle, and/or benefits plan cost to update said benefits plan information benefits plan information, benefits plan, benefits plan cycle, and/or benefits plan cost based at least in part on the user input; said cost calculation module determining an expected deduction amount for each benefit plan based on the benefits plan cycle and benefits plan cost;
said mapping module mapping at least one deduction slot and at least a portion of the deduction amount to at least one benefits plan to determine an actual deduction amount per benefits plan;
said discrepancy module identifying discrepancies by comparing each actual deduction amount per benefits plan with the expected deduction amount for each benefits plan;
an output port sending the identified discrepancies to a user device;
a consolidated bill generation module executed by said processor, said consolidated bill generation module grouping benefits plans into carrier groups based on benefits plan information and merging a carrier bill based at least the actual deduction amount, benefits plan cost, and the benefits plan cycle;
said output port sending the carrier bill to a user device; and
a payment processing module executing on the processor that communicates with an external banking system for payment of the carrier bill.

17. The system of claim 16, further comprising:
the input port receiving a carrier invoice having a carrier invoice benefits plan cost;
the discrepancy module further identifying additional discrepancies by comparing the carrier invoice benefits plan cost to the discrepancies identified by comparing each actual deduction amount per benefits plan with the expected deduction amount for each benefits plan.

18. A system for managing benefits payments, comprising:
an input port receiving benefits plan information corresponding to benefits recipients, including an identification of at least one benefits plan having a benefits plan cycle and a benefits plan cost;
said input port receiving a payroll including, for each benefit recipient, at least one deduction slot indicating a deduction amount;
a computer including a processor for executing a cost calculation module, a mapping module, and a reconciliation module;
said cost calculation module determining an expected deduction amount for each benefit plan based on the benefits plan cycle and benefits plan cost;
said mapping module mapping at least one deduction slot and at least a portion of the deduction amount to at least one benefits plan to determine an actual deduction amount per benefits plan;
said discrepancy module identifying discrepancies by comparing each actual deduction amount per benefits plan with the expected deduction amount for each benefits plan;
a reconciliation module configured to identify and present options to cure the discrepancies and said reconciliation module merging said discrepancies and options into a report for display on a user device.
said reconciliation module receiving user input in response to the presented options to cure discrepancies and determining a new actual deduction amount for at least one payroll;
a consolidated bill generation module executed by said processor, said consolidated bill generation module grouping benefits plans into carrier groups based on benefits plan information and merging a carrier bill based at least on the new actual deduction amount, the benefits plan cost, and the benefits plan cycle; and
an output port for sending the carrier bill to a third-party device.

19. The system of claim 18, further comprising a payment processing module executing on the processor that communicates with an external banking system for payment of the carrier bill.

20. The system of claim 18, further comprising:
the input port receiving a carrier invoice having a carrier invoice benefits plan cost; and
the discrepancy module identifying additional discrepancies by comparing the carrier invoice benefits plan cost to the discrepancies identified by comparing each actual deduction amount per benefits plan with the expected deduction amount for each benefits plan.

21. The system of claim 1, further comprising a verification module receiving a user input corresponding to at least one benefit plan recipient and comparing the user input with said benefits plan information, benefits plan, benefits plan cycle, and/or benefits plan cost to update said benefits plan information benefits plan information, benefits plan, benefits plan cycle, and/or benefits plan cost based at least in part on the user input.
